(19) Europäisches Patentamt
European Patent Office
Office européen des brevets

(11) Veröffentlichungsnummer: **0 114 246**
**B1**

# (12) EUROPÄISCHE PATENTSCHRIFT

(45) Veröffentlichungstag der Patentschrift: **03.05.89**

(51) Int. Cl.⁴: **G 11 B 15/66,** G 11 B 15/18

(21) Anmeldenummer: **83111834.4**

(22) Anmeldetag: **25.11.83**

(54) **Magnetbandgerät.**

(30) Priorität: **29.11.82 DE 3244165**
**16.05.83 DE 3317720**

(43) Veröffentlichungstag der Anmeldung:
**01.08.84 Patentblatt 84/31**

(45) Bekanntmachung des Hinweises auf die Patenterteilung:
**03.05.89 Patentblatt 89/18**

(84) Benannte Vertragsstaaten:
**DE GB**

(56) Entgegenhaltungen:
**EP-A- 0 109 154**
**DE-A- 2 823 226**
**FR-A- 2 214 933**
**FR-A- 2 360 958**
**FR-A- 2 482 758**
**US-A- 3 924 823**
**US-A- 3 959 821**
**US-A- 4 099 686**
**US-A- 4 156 260**
**US-A- 4 216 508**
**US-A- 4 559 571**

(73) Patentinhaber: **TANDBERG DATA A/S, Kjelsasveien 161 Postboks 9 Korsvoll, N-0808 Oslo 8 (NO)**

(72) Erfinder: **Rudi, Guttorm, Edvard-Griegsvei 17, N-1472 Fjellhamar (NO)**
Erfinder: **Dilling, Jan Erik, Bevereien 14, N-Oslo 5 (NO)**

(74) Vertreter: **Mehl, Ernst, Dipl.-Ing. et al, Postfach 22 13 17, D-8000 München 22 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Magnetbandgerät entsprechend dem Oberbegriff des Patentanspruchs 1.

Es sind bereits Magnetbandgeräte allgemein bekannt, bei denen Daten auf ein in einer Kassette enthaltenes Magnetband aufgezeichnet werden und von diesen gelesen werden. Bei einer Aufzeichnung von digitalen Daten wird eine Kassette benutzt, die außer den Spulen für das Magnetband eine Andruckrolle und eine schwenkbar angeordnete Staubkappe enthält. Die Kassette wird üblicherweise in Querrichtung in einen Einschubkanal des Magnetbandgeräts hineingeschoben. Dabei wird selbsttätig die Staubkappe geöffnet. An der Rückseite des Einschubkanals sind eine von einem Bandantriebsmotor angetriebene Bandantriebsrolle und der Magnetkopf angeordnet. Die Bandantriebsrolle drückt zum Antrieb des Magnetbands dieses gegen die Andruckrolle. Der Magnetkopf berührt an dem durch die Staubkappe freigegebenen Arbeitsbereich das Magnetband, um die Daten aufzuzeichnen oder zu lesen. Derartige Magnetbandgeräte weisen eine verhältnismäßig große Breite auf, die im wesentlichen durch die Länge der Kassette bestimmt wird.

In der EP-A-0 109 154 ist ein Magnetbandgerät beschrieben, bei dem die Kassette in Längsrichtung in den Einschubkanal eingeschoben wird. Zu diesem Zweck wird die Kassette auf einen Schlitten gelegt, der aus dem Magnetbandgerät herausragt. Anschließend wird die Kassette gemeinsam mit dem Schlitten in das Magnetbandgerät hineingeschoben. Während des Hineinschiebens wird die Staubkappe dadurch geöffnet, daß ein Hebel gegen das rückwärtige Ende der Staubkappe drückt. Wenn die Kassette gegen die Kraft einer Feder vollständig in den Einschubkanal eingeschoben ist, wird vor dem Einschubkanal ein Hebel umgelegt, der ein Herausschieben der Kassette aus dem Magnetbandgerät sperrt. Gleichzeitig mit dem Umlegen des Hebels wird ein am hinteren Ende des Magnetbandgeräts drehbar gelagerter Hebel, auf dem der Bandantriebsmotor und die zugehörige Antriebsrolle sowie der Magnetkopf befestigt sind, in Richtung zur Kassette geschwenkt, so daß die Antriebsrolle gegen die Andruckrolle in der Kassette drückt und gleichzeitig wird der Magnetkopf von einer Ruhestellung hinter die Staubkappe in eine Arbeitsstellung geschwenkt, in der er das Magnetband berührt. Durch das Einschieben der Kassette in Längsrichtung in den Einschubkanal anstelle des Einschiebens in Querrichtung können besonders geringe Abmessungen des Magnetbandgeräts erreicht werden, jedoch sind für das Betätigen des Magnetbandgeräts zwei Handgriffe erforderlich, nämlich zum einen das Einschieben des Schlittens und zum andern das Verriegeln und Heranschwenken der Antriebsrolle und des Magnetkopfs unter Verwendung des die Kassette in dem Einschubkanal haltenden Hebels.

Der Erfindung liegt die Aufgabe zugrunde, ein Magnetbandgerät anzugeben, das für die digitale Aufzeichnung von Daten vorgesehen ist, das besonders geringe Abmessungen aufweist und das einfach zu bedienen ist.

Erfindungsgemäß wird die Aufgabe bei dem Magnetbandgerät der eingangs genannten Art durch die im kennzeichnenden Teil des Patentanspruchs 1 angegebenen Merkmale gelöst.

Das Magnetbandgerät gemäß der Erfindung hat den Vorteil, daß unter Verwendung des den Einschubkanal abdeckenden Deckels eine einzige Betätigungsvorrichtung vorgesehen ist, um die Kassette in den Einschubkanal hineinzuschieben und den Magnetkopf zwischen seiner Ruhestellung und seiner Arbeitsstellung hin- und herzuschwenken.

Ein verhältnismäßig einfacher Aufbau des Magnetbandgeräts wird erreicht, wenn die Betätigung der Schwenkanordnung und das Einschwenken des Magnetkopfs hinter die Staubkappe während des Einschiebens der Kassette in ihre endgültige Arbeitsstellung erfolgt. Zum Einschieben der Kassette in die endgültige Arbeitsstellung ist es insbesondere günstig, wenn dies während des Schließens eines den Einschubkanal abdeckenden Deckels des Gehäuses erfolgt.

Eine vorteilhafte Ausgestaltung der Schwenkanordnung wird erreicht, wenn diese aus einem drehbar gelagerten Schwenkarm und einer an der Innenseite des Deckels angeordneten Verbindungsstange gebildet wird und wenn das freie Ende des Schwenkarms beim Schließen des Deckels auf einen hebelartigen rückwärtigen Fortsatz der Staubkappe drückt.

Das Einschwenken des Magnetkopfs wird dadurch erreicht, daß der Magnetkopfträger um eine Achse schwenkbar gelagert ist und durch ein an der Innenseite des Deckels befestigtes Zugmittel beim Öffnen des Deckels in seine Ruhestellung schwenkbar ist und durch eine am Magnetkopfträger befestigte Feder beim Schließen des Deckels in seine Arbeitslage schwenkbar ist. Das Zugmittel ist zweckmäßigerweise als Zugfeder ausgebildet.

Um die Abläufe beim Einschieben und beim Herausnehmen der Kassette genau definiert ablaufen zu lassen und insbesondere die Bewegung des Magnetkopfträgers genau festzulegen, ist es vorteilhaft, wenn am Magnetkopfträger ein Ende eines drehbar gelagerten Hebels angelenkt ist, der beim Öffnen bzw. Schließen eines den Einschubkanal abdeckenden Deckels über eine am Deckel befestigte und das andere Ende des Hebels bewegende Verbindungsstange den Magnetkopfträger in seine Ruhestellung bzw. Arbeitsstellung schwenkt.

Das Magnetbandgerät weist eine hohe Sicherheit gegenüber Fehlbedienungen auf. Beispielsweise ist es bei geöffnetem Deckel infolge einer selbstsperrenden Stellung eines Schwenkarms nicht möglich, die Kassette in ihre Arbeitsstellung zu bringen.

Um die Kassette nach dem Öffnen des Deckels wieder aus dem Magnetbandgerät entnehmen zu können, ist es vorteilhaft, wenn am rückwärtigen Ende des Einschubkanals eine Blattfeder vorge-

sehen ist, die die Kassette bei geöffnetem Deckel herausschiebt.

Zum Arretieren der Kassette in ihrer endgültigen Stellung ist es vorteilhaft, wenn am Anfang und am Ende des Einschubkanals auf Blattfedern angeordnete Kugeln vorgesehen sind, die von unten gegen Ausnehmungen in der Kassette drükken und wenn am Deckel ein Keil vorgesehen ist, der beim Schließen des Deckels die Blattfeder am Anfang des Einschubkanals in Richtung der Kassette drückt.

Da die Andruckrolle in der Kassette vertieft angeordnet sind, ist es zweckmäßig, den mit der Antriebsrolle versehenen Bandantriebsmotor schwenkbar zu lagern, so daß die Antriebsrolle beim Einschieben und beim Herausnehmen der Kassette an der Längsseite der Kassette abrollt.

Im folgenden wird ein Ausführungsbeispiel des Magnetbandgeräts gemäß der Erfindung anhand von Zeichnungen näher erläutert. Es zeigen

Fig. 1 eine Draufsicht auf eine erste Ausführungsform des Magnetbandgeräts,

Fig. 2 einen Querschnitt durch das Magnetbandgerät,

Fig. 3 einen Längsschnitt durch das Magnetbandgerät,

Fig. 4 eine Draufsicht auf eine zweite Ausführungsform des Magnetbandgeräts bei geöffnetem Deckel,

Fig. 5 eine Draufsicht auf die zweite Ausführungsform des Magnetbandgeräts bei geschlossenem Deckel.

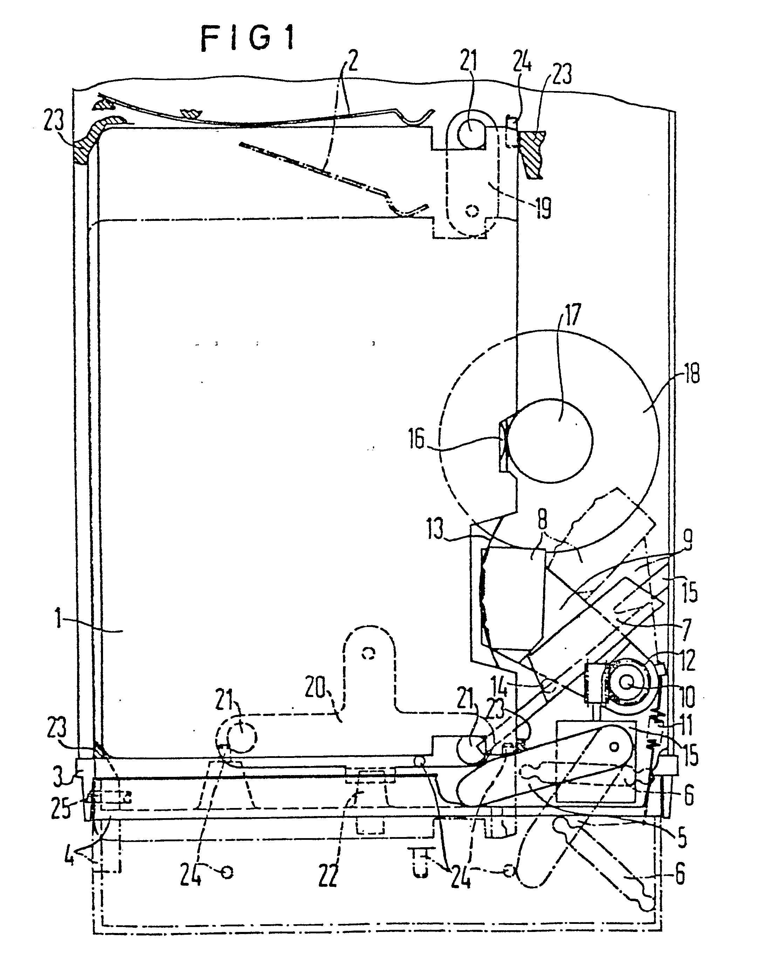

Die in Fig. 1 dargestellte erste Ausführungsform des Magnetbandgeräts weist einen Einschubkanal für eine Kassette 1 auf, die in einer teilweise eingeschobenen Stellung strichpunktiert und in ihrer endgültigen Arbeitsstellung durchgezogen dargestellt ist. Die Kassette 1 wird in Längsrichtung in den Einschubkanal eingeschoben und durch eine Blattfeder 2 am rückwärtigen Ende des Einschubkanals in dieser Stellung gehalten. Das Gehäuse 3 des Magnetbandgeräts ist mit einem klappbaren Deckel 4 versehen, der in seiner geöffneten Stellung strichpunktiert und in seiner geschlossenen Stellung durchgezogen dargestellt ist. Das Magnetbandgerät enthält eine aus einem Schwenkarm 5 und einer Verbindungsstange 6 gebildete Schwenkanordnung, die zum selbsttätigen Öffnen einer Staubkappe 7 der Kassette 1 dient. Der Schwenkarm 5 ist um eine Achse drehbar gelagert. An ihm ist das eine Ende der Verbindungsstange 6 angeordnet, deren anderes Ende der Innenseite des Deckels 4 angeordnet ist. Ein Magnetkopf 8 ist auf einem Magnetkopfträger 9 befestigt, der um eine Achse 10 schwenkbar ist. Bei geöffnetem Deckel 4 befindet sich der Magnetkopf infolge eines an der Innenseite des Deckels 4 und am Magnetkopfträger 9 befestigten Zugmittels 11, das beispielsweise als Zugfeder ausgebildet ist in der gestrichelt dargestellten Stellung. Ebenso befindet sich die Schwenkanordnung 5, 6 in der gestrichelt dargestellten Stellung.

Wenn der Deckel 4 geschlossen wird, drückt das freie Ende des Schwenkarms 5 gegen einen rückwärtigen Fortsatz der Staubkappe 7 und klappt dies aus der Kassette 1 heraus. Außerdem wird das Zugmittel 11 entlastet, so daß eine konzentrisch zur Achse 10 angeordnete, vorgespannte Druckfeder 12 eine Torsionskraft auf den Magnetkopfträger ausüben kann und den Magnetkopf 8 hinter die Staubkappe 7 in seinen Arbeitsbereich hineinschwenkt und dabei das Magnetband 13 berührt. Der Magnetkopfträger 9 wird bis zu einem Anschlag 14 geschwenkt und in dieser Stellung gehalten. Der Magnetkopf 8 ist in Richtung der Achse 10 und damit senkrecht zur Laufrichtung des Magnetbands 13 unter Verwendung eines Antriebsmotors 15 verschiebbar, um den Magnetkopf 8 auf verschiedene Spuren des Magnetbands 13 positionieren zu können. Die Staubkappe 7 wird durch einen Anschlag 15 in ihrer geöffneten Lage gehalten. Dieser Anschlag 15 kann auch gleichzeitig als Anschlag für den Magnetkopfträger 9 in seiner Ruhelage dienen.

Eine Andruckrolle 16 ist in der Kassette 1 vertieft angeordnet. Die Antriebsrolle 17 und der Bandantriebsmotor 18 sind daher schwenkbar ausgebildet, so daß beim Einschieben oder Herausziehen der Kassette 1 die Antriebsrolle 17 an der Längsseite der Kassette 1 abrollt. Zweckmäßigerweise ist der Bandantriebsmotor 18 in seinem Schwerpunkt gelagert und die Antriebsrolle 17 ist gegen die Kassette 1 vorgespannt.

Von unten drücken mit Kugeln 21 versehene Blattfedern 19 und 20 gegen die Kassette 1. Die Blattfeder 19 drückt mit einer vorgegebenen Kraft gegen die Kassette 1, während die Blattfeder 20 mit einer verringerten Kraft gegen die Kassette 1 drückt. Wenn der Deckel 4 vollständig geschlossen ist, drückt ein Keil 22 gegen die Blattfeder 20, so daß diese mit der gleichen Kraft wie die Blattfeder 19 gegen die Kassette 1 drückt. Die Kugeln 21 verrasten dabei in entsprechenden Ausnehmungen der Kassette 1. Zum Arretieren in der endgültigen Lage sind an den den vier Ecken der Kassette 1 zugeordneten Stellen des Einschubkanals entsprechende Flächen vorgesehen. Weiterhin sind zur Festlegung einer Bezugsebene des Magnetbands 13 Referenzstifte 24 vorgesehen. Einer dieser Referenzstifte ist am rückwärtigen Ende des Einschubkanals angeordnet, während drei Referenzstifte an der Innenseite des Deckels 4 angeordnet sind und bei geschlossenem Deckel 4 die Kassette 1 berühren. Der Deckel 4 wird durch mit Federn versehene Stifte 25 an beiden Seiten des Deckels 4 in seiner geschlossenen Stellung gehalten.

Beim Öffnen des Deckels 4 wird unter der Wirkung des Zugmittels 11 der Magnetkopf 8 wieder in seine Ruhestellung geschwenkt. Außerdem nimmt die Schwenkanordnung 5, 6 wieder die gestrichelt dargestellte Stellung an. Die Blattfeder 2 schiebt die Kassette 1 wieder bis zu der gestrichelt dargestellten Darstellung heraus, so daß diese manuell dem Magnetbandgerät entnommen werden kann.

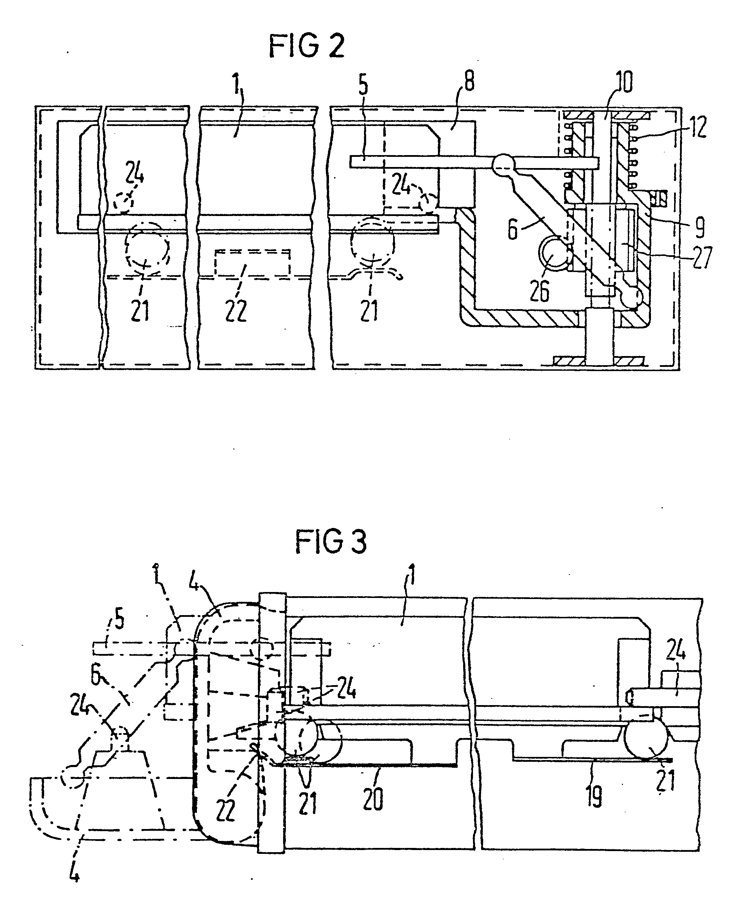

Bei dem in Fig. 2 dargestellten Querschnitt des Magnetbandgeräts, der aus Platzgründen mehrfach gebrochen dargestellt ist, ist die Kassette 1 in den Einschubkanal hineingeschoben. Die Stahlkugeln 21 sind unter der Wirkung der Blattfeder 22 in die entsprechenden Ausnehmungen der Kassette hineingedrückt. Der Magnetkopf 8 auf dem Magnetkopfträger 9 befindet sich in einer Arbeitsstellung. Der Magnetkopfträger 9 ist um die gestellfeste Achse 10 schwenkbar. Außerdem ist der Magnetkopfträger 9 längs der Achse 10 verschiebbar, um den Magnetkopf auf verschiedene Spuren des Magnetbands 13 positionieren zu können. Die Verschiebung des Magnetkopfträgers 9 erfolgt unter Verwendung einer durch den Antriebsmotor 15 angetriebenen Schnecke 26, die ihrerseits ein Schneckenrad 27 antreibt. Dieses weist ein Innengewinde auf, das mit einem Außengewinde auf der Achse 10 in Wirkverbindung steht. Bei einer Drehung des Schneckenrads 27 wird dieses in Längsrichtung der Achse 10 verschoben und zwar in Abhängigkeit von der Drehrichtung der Schnekke 26. Die Druckfeder 12 verhindert eine gleichzeitige Drehung des Magnetkopfträgers 9 und drückt außerdem den Magnetkopfträger 9 gegen das Schneckenrad 27. Der Magnetkopfträger 9 folgt damit der Bewegung des Schneckenrads 27 in Richtung der Achse 10, so daß auf diese Weise der Magnetkopf 8 auf verschiedene Spuren des Magnetbands 13 positioniert werden kann.

Bei dem in Fig. 3 dargestellten Längsschnitt des Magnetbandgeräts, der ebenfalls aus Platzgründen mehrfach abgebrochen ist, befindet sich die Kassette 1 bei der durchgezogenen Darstellung in ihrer Arbeitsstellung und wird durch die Stahlkugeln 21 und durch die Stifte 24 arretiert. Der Keil 22 drückt gegen die Blattfeder 20. In der strichpunktierten Darstellung befindet sich die Kassette 1 in der vorläufigen Stellung bei geöffnetem Dekkel 4. Die Schwenkanordnung 5, 6 ist in diesem Fall herausgeschwenkt und berührt die Kassette 1 nicht.

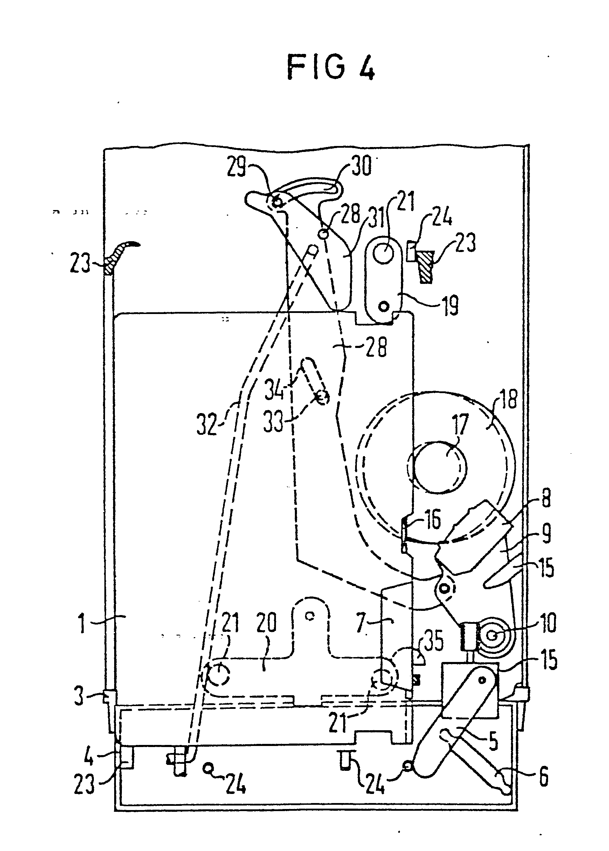

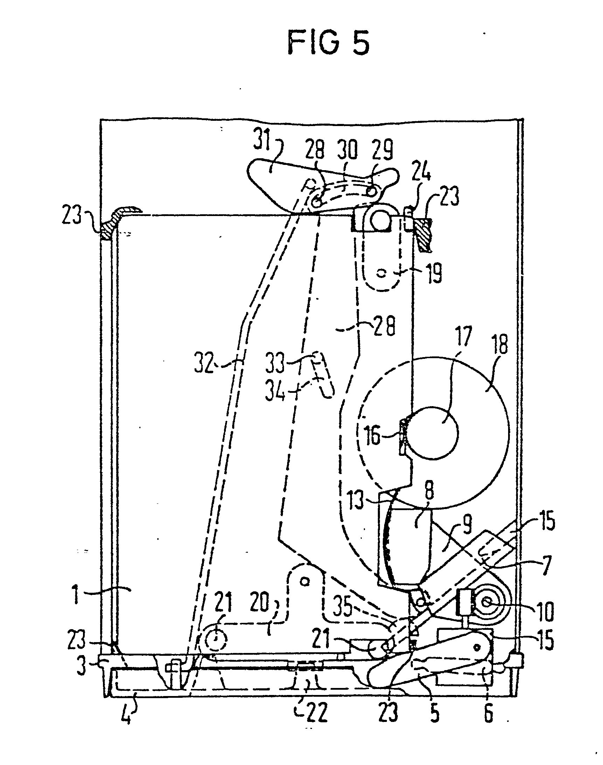

Die in Fig. 4 dargestellte zweite Ausführungsform des Magnetbandgeräts unterscheidet sich von dem in Fig. 1 dargestellten Magnetbandgerät im wesentlichen dadurch, daß die Blattfeder 2 zum Auswurf der Kassette und das Zugmittel 11 zum Einschwenken des Magnetkopfs 8 in seine Arbeitsstellung durch eine Hebelanordnung ersetzt wurden. Bei der Darstellung in Fig. 4 ist das Magnetbandgerät mit geöffnetem Deckel 4 und teilweise eingeschobener Kassette 1 dargestellt, während bei der Darstellung in Fig. 5 der Deckel 4 geschlossen ist und die Kassette 1 in ihre Endstellung verrastet ist.

Bei geöffnetem Deckel 4 befindet sich der Magnetkopf 8 in der in Fig. 4 dargestellten Stellung. In diese Stellung wurde er beim Öffnen des Deckels 4 durch einen Hebel 28 gebracht, der über einen Schwenkarm 31 und eine Verbindungsstange 32 mit dem Deckel 4 verbunden ist. Der Hebel 28 ist um einen an der Unterseite des Magnetbandgeräts angeordneten Stift 33 drehbar und infolge eines Langlochs 33 auch verschiebbar gelagert. Der Schwenkarm 31 ist um einen Stift 28 drehbar und am Schwenkarm 31 greift die Verbindungsstange 32 an. Außerdem enthält der Schwenkarm 31 einen Stift 29, der in einer bogenförmigen Öffnung 30 des Hebels 28 verschiebbar gelagert ist.

Wenn der Deckel 4 geschlossen wird, drückt das freie Ende des Schwenkarms, wie bereits in Fig. 1 dargestellt, gegen den rückwärtigen Vorsatz der Staubkappe 7 und klappt diese aus der Kassette heraus. Außerdem dreht die Verbindungsstange 32 den Schwenkarm 31 um den Stift 28, während gleichzeitig die Kassette 1 in das Magnetbandgerät hineingeschoben wird. Mit dem Drehen des Schwenkarms 31 wird auch der Hebel 28 um den Stift 33 gedreht und gleichzeitig im Langloch 34 verschoben. Da am anderen Ende des Hebels 28 der Magnetkopfträger 9 angelenkt ist, wird dieser durch die Bewegung des Hebels 28 von seiner Ruhestellung in die in Fig. 5 dargestellte Arbeitsstellung geschwenkt. Der Hebel 28 wird dabei durch die Verbindungsstange 32 gegen einen Anschlag 35 gedrückt, wobei die Verbindungsstange 32 derart verformt wird, daß sie als Feder wirkt, um den Hebel 28 gegen diesen Anschlag 35 zu drücken.

Beim Öffnen des Deckels 4 wird unter der Wirkung der Verbindungsstange 32 der Schwenkarm 31 wieder gedreht und der Hebel 28 verschiebt den Magnetkopfträger 9 wieder in die Ruhestellung. Gleichzeitig schiebt der Schwenkarm 31 die Kassette 1 teilweise aus dem Magnetbandgerät heraus, wie dies in Fig. 4 dargestellt ist. Die Kassette 1 kann in dieser Stellung dem Magnetbandgerät entnommen werden. Ein Hineinschieben der Kassette 1 in ihre Arbeitsstellung ist infolge der selbstsperrenden Stellung des Schwenkarms 31 nicht möglich. Ein Hineinschieben ist erst dann wieder möglich, wenn der Deckel 4 geschlossen wird.

**Patentansprüche**

1. Magnetbandgerät, bei dem Daten unter Verwendung eines Magnetkopfs (8) auf ein in einer Kassette (1) enthaltenes Magnetband (13) aufgezeichnet und/oder von diesem gelesen werden, bei dem das Magnetband (13) über eine Antriebsrolle (17) und eine Andruckrolle (16) mittels eines Bandantriebsmotors (18) angetrieben wird, bei dem die Kassette (1) in Längsrichtung in das Magnetbandgerät eingeschoben wird, bei dem während des Einschiebens der Kassette (1) eine Staubkappe (7) der Kassette (1) geöffnet wird und aus der Kassette (1) herausgeschwenkt wird und bei der der Magnetkopf (8) auf einem Magnetkopfträger (9) angeordnet ist, mittels dem der Magnetkopf (8) von einer Ruhestellung hinter die Staubkappe (7) in eine Arbeitsstellung eingeschwenkt wird, um das Magnetband (13) zu berühren, dadurch gekennzeichnet, daß ein den Einschubkanal abdeckender Deckel (4) vorgesehen ist, der mit dem Magnetkopfträger (9) mechanisch verbunden ist und daß durch das Schließen bzw. Öffnen des Deckels (4) der Magnetkopf in seine Arbeitsstellung zum Magnetband (13) hinschwenkbar bzw. in seine Ruhestellung vom Magnetband (13) wegschwenkbar ist.

2. Anordnung nach Anspruch 1, dadurch gekennzeichnet, daß das Öffnen der Staubkappe (7) durch eine Schwenkanordnung (5, 6) erfolgt, die aus einem drehbar gelagerten Schwenkarm (5) und einer an der Innenseite des Deckels (4) angeordneten Verbindungsstange (6) gebildet wird und daß das freie Ende des Schwenkarms (5) beim Schließen des Deckels (4) auf einen hebelartigen rückwärtigen Fortsatz der Staubkappe (7) drückt.

3. Magnetbandgerät nach Anspruch 1 oder Anspruch 2, dadurch gekennzeichnet, daß am Magnetkopfträger (9) ein Ende eines drehbar gelagerten Hebels (28) angelenkt ist, der beim Öffnen bzw. Schließen eines den Einschubkanal abdekkenden Deckels (4) über eine am Deckel (4) befestigte und das andere Ende des Hebels (22) bewegende Verbindungsstange (32) den Magnetkopfträger (9) in seine Ruhestellung bzw. Arbeitsstellung schwenkt.

4. Magnetbandgerät nach Anspruch 3, dadurch gekennzeichnet, daß das andere Ende des Hebels (28) über einen drehbar gelagerten Schwenkarm (31) bewegbar ist, an dem die Verbindungsstange (32) angelenkt ist und der mit dem Hebel (28) gelenkig verbunden ist.

5. Anordnung nach Anspruch 3 oder Anspruch 4, dadurch gekennzeichnet, daß am Schwenkarm (31) ein Stift (29) angeordnet ist, der in eine bogenförmige Ausnehmung (30) des Hebels (28) eingreift.

6. Magnetbandgerät nach einem der Ansprüche 3 bis 5, dadurch gekennzeichnet, daß der Schwenkarm (31) beim Öffnen des Deckels (4) die Kassette (1) teilweise aus dem Magnetbandgerät herausschiebt.

7. Magnetbandgerät nach einem der Ansprüche 3 bis 6, dadurch gekennzeichnet, daß der Schwenkarm (31) in eine selbstsperrende Position schwenkbar ist, aus der er erst beim Schließen des Deckels (4) wieder herausdrehbar ist.

8. Magnetbandgerät nach einem der Ansprüche 1 bis 7, dadurch gekennzeichnet, daß der Magnetkopfträger (5) durch ein an der Innenseite des Deckels (4) befestigtes Zugmittel (11) beim Öffnen des Deckels (4) in seine Ruhestellung schwenkbar ist und durch eine am Magnetkopfträger (9) befestigte Feder (12) beim Schließen des Deckels (4) in seine Arbeitsstellung schwenkbar ist.

9. Magnetbandgerät nach einem der Ansprüche 1 bis 8, dadurch gekennzeichnet, daß am rückwärtigen Ende des Einschubkanals eine Blattfeder (2) vorgesehen ist, die die Kassette (1) bei geöffnetem Deckel (4) herausschiebt.

10. Magnetbandgerät nach einem der Ansprüche 1 bis 9, dadurch gekennzeichnet, daß am Dekkel (4) ein Keil (22) vorgesehen ist, der nach dem Schließen des Deckels (4) eine mit Stahlkugeln (21) versehene Blattfeder (20) verstärkt von unten gegen die Kassette (1) drückt, so daß die Stahlkugeln (21) in entsprechende Ausnehmungen der Kassette (1) eingreifen.

11. Magnetbandgerät nach einem der Ansprüche 1 bis 10, dadurch gekennzeichnet, daß der mit der Antriebsrolle (17) versehene Bandantriebsmotor (18) schwenkbar ausgebildet ist und daß die Antriebsrolle (17) beim Einschieben und Herausnehmen der Kassette (1) an dieser abrollt.

**Claims**

1. Magnetic tape apparatus in which data are recorded using a magnetic head (8) onto a magnetic tape (13) contained in a cassette (1) and/or are read from the said magnetic tape, in which the magnetic tape (13) is driven via a drive roller (17) and a pinch roller (16) by means of a tape-drive motor (18), in which the cassette (1) is pushed in longitudinal direction into the magnetic tape apparatus, in which, during the pushing-in of the cassette (1), a dust cap (7) of the cassette (1) is opened and is swivelled out of the cassette (1) and in which the magnetic head (8) is arranged on a magnetic head carrier (9), by means of which the magnetic head (8) is swivelled from a rest position into a working position behind the dust cap (7), in order to contact the magnetic tape (13), characterized in that a cover (4), which covers the pushing-in channel and is mechanically connected to the magnetic head carrier (9), is provided and in that the magnetic head can be swivelled towards the magnetic tape (13) into tis working position and can be swivelled away from the magnetic tape (13) into its rest position by the closing and opening, respectively, of the cover (4).

2. Arrangement according to Claim 1, characterized in that the opening of the dust cap (7) takes place by a swivel arrangement (5, 6), which is formed by a pivotally mounted swivel arm (5) and a connecting rod (6) arranged on the inside of the cover (4) and in that, during the closing of the cover (4), the free end of the swivel arm (5) presses on a lever-like rearward continuation of the dust cap (7).

3. Magnetic tape apparatus according to Claim 1 or Claim 2, characterized in that one end of a pivotally mounted lever (28) is articulated on the magnetic head carrier (9), which lever swivels the magnetic head carrier (9) into its rest position and working position during opening and closing, respectively, of a cover (4), covering the pushing-in channel, via a connecting rod (32) fastened on the cover (4) and moving the other end of the lever (22).

4. Magnetic tape apparatus according to Claim 3, characterized in that the other end of the lever (28) can be moved via a pivotally mounted swivel arm (31), on which the connecting rod (32) is articulated and which is jointedly connected to the lever (28).

5. Arrangement according to Claim 3 or Claim 4, characterized in that a pin (29) which engages into a bow-shaped recess (30) of the lever (28) is arranged on the swivel arm (31).

6. Magnetic tape apparatus according to one of Claims 3 to 5, characterized in that the swivel arm (31) pushes the cassette (1) partially out of the magnetic tape apparatus during opening of the cover (4).

7. Magnetic tape apparatus according to one of Claims 3 to 6, characterized in that the swivel arm (31) can be swivelled into a self-blocking position, from which it cannot be pivoted out again until closing of the cover (4).

8. Magnetic tape apparatus according to one of Claims 1 to 7, characterized in that the magnetic head carrier (5) can be swivelled into its rest position during opening of the cover (4) by a tension means (11) fastened on the inside of the cover (4) and can be swivelled into its working position during closing of the cover (4) by a spring (12) fastened on the magnetic head carrier (9).

9. Magnetic tape apparatus according to one of Claims 1 to 8, characterized in that a leaf spring (2), which pushes the cassette (1) out when the cover (4) is open, is provided on the rear end of the pushing-in channel.

10. Magnetic tape apparatus according to one of Claims 1 to 9, characterized in that on the cover (4) there is provided a wedge (22) which, after closing of the cover (4), pushes a leaf spring (20), provided with steel balls (21), with increased force from below against the cassette (1), so that the steel balls (21) engage in corresponding recesses of the cassette (1).

11. Magnetic tape apparatus according to one of Claims 1 to 10, characterized in that the tape-drive motor (18) provided with the drive roller (17) is of swivelling design and in that, during the pushing-in and taking-out of the cassette (1), the drive roller (17) rolls on the latter.

**Revendications**

1. Appareil à bande magnétique, dans lequel des données sont enregistrées moyennant l'utilisation d'une tête magnétique (8) sur une bande magnétique (13) contenue dans une cassette (1) et/ou sont lues à partir de cette bande, dans lequel la bande magnétique (13) est entraînée par l'intermédiaire d'un galet d'entraînement (17) et d'un galet de pression (16) au moyen d'un moteur (18) d'entraînement de la bande, dans lequel la cassette (1) est introduite dans la direction longitudinale dans l'appareil à bande magnétique, dans lequel un capot anti-poussière (7) de la cassette (1) est ouvert et est écarté par pivotement de la cassette (1) pendant l'insertion de cette dernière, et dans lequel la tête magnétique (8) est disposée sur un support (9), à l'aide duquel la tête magnétique (8) est introduite par pivotement depuis une position de repos située en arrière du capot anti-poussières (7), dans une position de travail, de manière à venir en contact avec la bande magnétique (13), caractérisé par le fait qu'il est prévu un couvercle (4), qui recouvre le canal d'insertion et est relié mécaniquement au support (9) de la tête magnétique, et que sous l'effet de la fermeture ou de l'ouverture du couvercle (4), la tête magnétique peut être amenée par pivotement dans sa position de travail par rapport à la bande magnétique (13) ou peut être écartée de la bande magnétique (13) par pivotement pour être amenée dans sa position de repos.

2. Dispositif suivant la revendication 1, caractérisé par le fait que l'ouverture du capot anti-poussières (7) est réalisée au moyen d'un dispositif pivotant (5, 6), qui est formé par un bras pivotant (5) monté rotatif et une barre de liaison (10) située sur la face intérieure du couvercle (4), et que, lors de la fermeture du couvercle (4), l'extrémité libre du bras pivotant (5) appuie sur un prolongement arrière en forme de levier du capot anti-poussières (7).

3. Appareil à bande magnétique suivant la revendication 1 ou 2, caractérisé par le fait que sur le support (9) de la tête magnétique est articulée une extrémité d'un levier (21) monté de manière à pouvoir pivoter, qui, lors de l'ouverture ou de la fermeture d'un couvercle (4) fermant le canal d'insertion fait pivoter le support (9) de la tête magnétique dans sa position de repos ou dans sa position de travail, par l'intermédiaire d'une barre de liaison (32) fixée au couvercle (4) et déplaçant l'autre extrémité du levier (22).

4. Appareil à bande magnétique suivant la revendication 3, caractérisé par le fait que l'autre extrémité du levier (28) peut être déplacée par l'intermédiaire d'un bras pivotant (31) monté rotatif, sur lequel la barre de liaison (34) est articulée et qui est relié de façon articulée au levier (28).

5. Dispositif suivant la revendication 3 ou 4, caractérisé par le fait que sur le bras pivotant (31) se trouve disposé un téton (29), qui s'engage dans une ouverture en forme d'arc de cercle (30) du levier (28).

6. Appareil à bande magnétique suivant l'une des revendications 3 à 5, caractérisé par le fait que, lors de l'ouverture du couvercle (4), le bras pivotant (31) fait ressortir partiellement la cassette (1) hors de l'appareil à bande magnétique.

7. Appareil à bande magnétique suivant l'une des revendications 3 à 6, caractérisé par le fait que le bras pivotant (31) peut être amené par pivotement dans une position d'autoblocage, d'où il ne peut être à nouveau ressorti que lors de la fermeture du couvercle (4).

8. Appareil à bande magnétique suivant l'une des revendications 1 à 7, caractérisé par le fait que le support (5) de la tête magnétique peut être amené par pivotement dans sa position de repos à l'aide de moyens de traction (11) fixés sur la face intérieure du boîtier (4), lors de l'ouverture de ce dernier, et peut être amené par pivotement dans sa position de travail au moyen d'un ressort (12) fixé au support (9) de la tête magnétique, lors de la fermeture du couvercle (4).

9. Appareil à bande magnétique suivant l'une des revendications 1 à 8, caractérisé par le fait que sur l'extrémité arrière du canal d'insertion il est prévu un ressort en forme de lame (2), qui repousse la cassette (1) à l'extérieur, lorsque le couvercle (4) est ouvert.

10. Appareil à bande magnétique suivant l'une des revendications 1 à 9, caractérisé par le fait que sur le couvercle (4) il est prévu un coin (22), qui, après fermeture du couvercle (4) repousse avec une poussée intensifiée le ressort en forme de lame (20) pourvu de billes d'acier (21), à partir du bas, contre la cassette (1) de sorte que les billes d'acier (21) s'engagent dans des évidements correspondants de la cassette (1).

11. Appareil à bande magnétique suivant l'une des revendications 1 à 10, caractérisé par le fait

que le moteur (18) d'entraînement de la bande, muni du galet d'entraînement (17), est agencé de manière à pouvoir pivoter et que le galet d'entraînement (17) roule contre la cassette (1), lors de l'insertion et du retrait de cette dernière.

FIG 1
1
2
3
4
5
6
6
6
7
8
9
10
11
12
13
14
15
15
16
17
18
19
20
21
21
21
22
23
23
23
23
24
24
24
24
25

FIG 2
1
5
8
10
12
24
24
6
9
27
26
21
22
21

FIG 3
1
4
1
5
6
24
24
24
22
21
20
19
21
4

FIG 4

29
30
28
31
21
24
23
23
19
28
34
33
32
18
17
8
16
9
15
1
21
20
7
10
35
15
3
21
5
4
23
24
24
6

FIG 5

31
28
30
29
24
23
23
19
28
17
18
32
33
34
16
13
8
9
15
7
1
21
20
35
10
21
15
23
3
4
22
23
5
6